# EUROPÄISCHE PATENTSCHRIFT

(11) **EP 2 171 281 B1**
(45) Veröffentlichungstag und Bekanntmachung des Hinweises auf die Patenterteilung: **03.10.2012**
(21) Anmeldenummer: 08802944.2
(22) Anmeldetag: 28.07.2008
(51) Int. Cl.: F04D 27/02, F04D 27/00

(54) **VERFAHREN ZUM ERKENNEN EINES STÖRFALLES "ROTATING STALL" BEI EINEM UMRICHTERGESPEISTEN VERDICHTER**
METHOD FOR DETECTING A ROTATING STALL FAULT IN A COMPRESSOR FED BY AN INVERTER
PROCÉDÉ DE DÉTECTION D'UN INCIDENT DU TYPE DÉCOLLEMENT TOURNANT DANS UN COMPRESSEUR ALIMENTÉ PAR CONVERTISSEUR

(30) Priorität: 30.07.2007 DE 102007035712
(43) Veröffentlichungstag der Anmeldung: 07.04.2010
(73) Patentinhaber: Siemens Aktiengesellschaft, 80333 München (DE)
(72) Erfinder: MERTENS, Axel, 30900 Wedemark (DE); NEESER, Gerhard, 91077 Neunkirchen (DE)
(86) Internationale Anmeldenummer: PCT/EP2008/059853
(87) Internationale Veröffentlichungsnummer: WO 2009/016145

(56) Entgegenhaltungen:
- DE-B3-102004 060 206
- US-A1- 2005 144 965
- US-A1- 2006 147 301
- SOROKES J: "Rotating Stall - An Overview of Dresser-Rand Experience"[Online] 19. Februar 2003 (2003-02-19), Seiten 1-22, XP007906222 Gefunden im Internet: URL:www.dresser-rand.com/e-tech/PDF%20File s/tp061.pdf> [gefunden am 2008-11-04] in der Anmeldung erwähnt

## Beschreibung

Die Erfindung bezieht sich auf ein Verfahren zum Erkennen eines Störfalles "Rotating Stall" bei einem Verdichter, der mittels eines umrichtergespeisten Drehstrommotors angetrieben wird.

Beim Betrieb von Verdichtern können folgende Störfälle auftreten, nämlich der Störfall "Pumpen" (Surge), "Ablösung" (Stall) und "Rotierende Ablösung" (Rotating Stall). In der Veröffentlichung mit dem Titel "Rotating Stall - An Overview of Dresser-Rand-Experience" von J. M. Sorokes, veröffentlicht Februar 2003 von der Firma Dresser-Rand Company, Houston, Texas, werden diese Störfälle kurz erläutert, bevor eingehend über den Störfall "Rotating Stall" referiert wird.

Der Störfall "Rotating Stall", geht häufig dem Störfall "Surge" voraus. Beide Störfälle sind beschränkt zulässig, aber aufgrund der beim Störfall "Rotating Stall" auftretenden Schwingungen wirkt dieser materialermüdend. Bisher wird die Erkennung dieses Störfalls "Rotating Stall" nur in großen Kompressoren mit Hilfe von Drucksensoren und/oder Schwingungsaufnehmern durchgeführt. Die Qualität und die Trennschärfe der Erkennung hängen von der Platzierung und der Anzahl der Sensoren und/oder Aufnehmer ab. Der Einbau dieser Drucksensoren und/oder Schwingungsaufnehmer und deren Auswertung sind aufwändig. Bei der Verwendung von Drucksensoren können Probleme bezüglich der Dichtigkeit der Einbaustellen und bezüglich der Trennschärfe der Zustandserkennung entstehen.

Aus der DE 10 2004 060 206 B3 ist ein Verdichter bekannt, der mittels einer umrichtergespeisten Drehstrommaschine angetrieben wird. Der verwendete Umrichter weist eine feldorientierte Regelung auf. Gemäß dieser Patentschrift wird ein Verfahren zum Betrieb eines umrichtergespeisten Verdichters angegeben, mit dem die Dauer als auch die Intensität von Surge-Zuständen erheblich verringert werden sollen. Bei diesem Verfahren wird aus Signalgrößen des Antriebs-Umrichters des Verdichters und einer abgespeicherten Pumpgrenzkennlinie ein Ist-Betriebszustand des Verdichters ermittelt. Durch die Verwendung von Signalgrößen der umrichtergespeisten Drehstrommaschine kann sehr schnell festgestellt werden, ob ein unzulässiger Betriebszustand vorliegt. Dazu werden die Größen drehmomentbildende Stromkomponente und Drehzahl-Istwert des Antriebs-Umrichters verwendet. Außerdem werden eine Pumpgrenzkennlinie und eine drehzahlabhängige Momentenkennlinie für dieses Verfahren benötigt.

Der Erfindung liegt nun die Aufgabe zugrunde, ein Verfahren zum Erkennen eines Störfalls "Rotating Stall" bei einem umrichtergespeisten Verdichter anzugeben, bei dem Signalgrößen des Antriebs-Umrichters verwendet werden.

Diese Aufgabe wird erfindungsgemäß mit den Merkmalen des Anspruchs 1 gelöst.

Diese Erfindung beruht auf der Erkenntnis, dass bei einem umrichtergespeisten Verdichter eine rotierende Ablösung zu einem Einbruch des Ankerstromes des den Verdichter antreibenden umrichtergespeisten Drehstrommotors führt.

Beim erfindungsgemäßen Verfahren wird aus gemessenen Stromrichter-Ausgangsströmen eine drehmomentbildende Stromkomponente berechnet, die einem Momenten-Schätzwert äquivalent ist. Mittels einer Drehzahlregelung wird in Abhängigkeit eines gemessenen drehzahlproportionalen Signals und eines vorbestimmten drehzahlproportionalen Signals ein Sollwert einer drehmomentbildenden Stromkomponente ermittelt, die äquivalent zu einem Momenten-Sollwert ist. Der in der feldorientierten Regelung vorhandene Motormoment-Schätzwert wird mit einem stationären Motormoment-Sollwert verglichen. Weicht dieser Schätzwert vom stationären Sollwert des Motormoments ab, liegt der Störfall "Rotating Stall" vor.

Durch die Verwendung von bereits vorhandenen Antriebsgrößen kann auf zusätzliche Drucksensoren und/oder Schwingungsaufnehmer verzichtet werden.

Vorteilhafte Ausführungsformen des erfindungsgemäßen Verfahrens sind den Unteransprüchen 2 bis 7 zu entnehmen.

Zur weiteren Erläuterung der Erfindung wird auf die Zeichnung Bezug genommen, in der eine Ausführungsform einer Vorrichtung zur Durchführung des erfindungsgemäßen Verfahrens schematisch veranschaulicht ist.
- Figur 1: zeigt ein Blockschaltbild eines umrichtergespeisten Verdichters mit einer Vorrichtung zur Durchführung des erfindungsgemäßen Verfahrens und in der
- Figur 2: ist in einem Diagramm über der Zeit ein Verlauf eines gemessenen Ankerstroms beim Störfall "Rotating Stall" dargestellt.

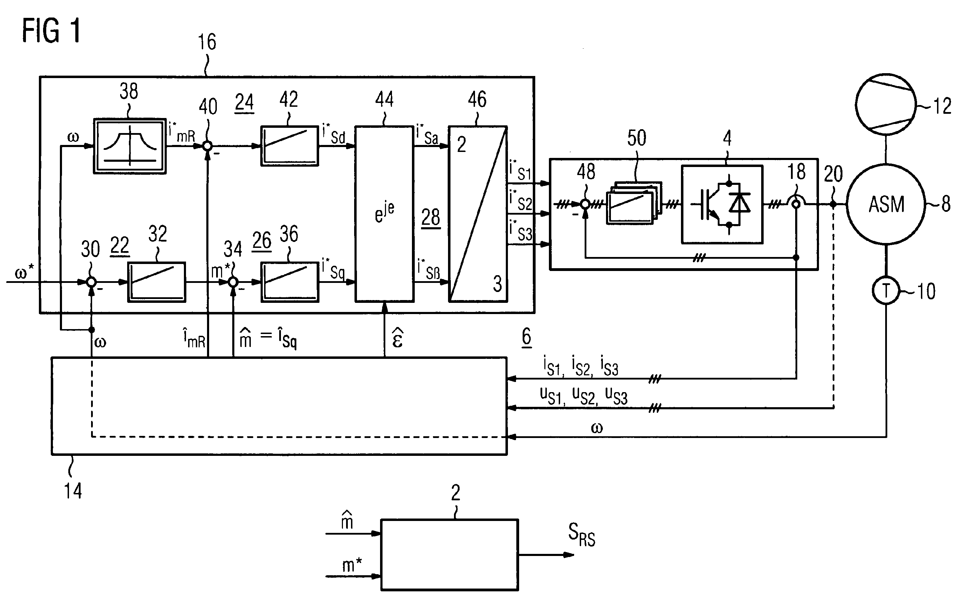

In der Figur 1 sind mit 2 eine Vorrichtung zur Durchführung des erfindungsgemäßen Verfahrens, mit 4 ein lastseitiger Stromrichter, mit 6 eine feldorientierte Regelung, mit 8 ein Drehstrommotor, mit 10 eine Einrichtung zur Erfassung eines drehzahlproportionalen Signals ω und mit 12 ein Verdichter bezeichnet. Der Drehstrommotor 8 ist ständerseitig mit Ausgängen des lastseitigen Stromrichters 4, der auch als Wechselrichter bezeichnet wird, verknüpft. Der Verdichter 12 und die Einrichtung 10 zur Erfassung eines drehzahlproportionalen Signals ω sind mit dem Läufer des Drehstrommotors 8 mechanisch verbunden. Der lastseitige Stromrichter 4 ist Teil eines Spannungszwischenkreis-Umrichters. Gleichspannungsseitig ist dieser lastseitige Stromrichter 4 mit einem Spannungszwischenkreis verknüpft, an dem auch ein netzseitiger Stromrichter gleichspannungsseitig angeschlossen ist. Aus Übersichtlichkeitsgründen ist von diesem Spannungszwischenkreis-Umrichter nur der lastseitige Stromrichter 4 dargestellt.

Die feldorientierte Regelung 6 weist einen Istwert-Rechner 14 und einen Sollwert-Rechner 16 auf. Dem Istwert-Rechner 14, sehr oft auch als Flussrechner bezeichnet, ist mit Messeinrichtungen 18 und 20 für Ausgangsströme i_{S1}, i_{S2} und i_{S3} und Ausgangsspannungen u_{S1}, u_{S2} und u_{S3} des lastseitigen Stromrichters 4 verbunden. Der Istwert-Rechner 14, der beispielsweise ein Strom- und ein Spannungsmodell aufweist, berechnet aus diesen Messwerten i_{S1}, i_{S2}, i_{S3} und u_{S1}, u_{S2}, u_{S3} und Parametern der Drehstrommaschine 8 orthogonale, feldorientierte Stromkomponenten î_{mR} und î_{Sq} und eine Flusslage ε̂. Wenn der Istwert-Rechner 14 ein Strommodell aufweist, so benötigt dieses Strommodell neben den gemessenen Ausgangsströmen i_{S1}, i_{S2} und i_{S3} des lastseitigen Stromrichters 4 auch noch ein drehzahlproportionales Signal ω. Dieses Signal ω wird ebenfalls beim Sollwert-Rechner 16 benötigt, so dass dieses Signal ω mit einer unterbrochenen Linie im Istwert-Rechner 14 dargestellt ist. Da es sich bei den berechneten Istwerten î_{mR}, î_{Sq} und ε̂ um Modellgrößen handelt, sind diese jeweils mit einem "^" versehen.

Der Sollwert-Rechner 16 weist einerseits einen Drehzahl-Regelkreis 22, einen Fluss-Regelkreis 24 und einen Momenten-Regelkreis 26 und andererseits eine Transformations-Einrichtung 28 auf. Der Drehzahl-Regelkreis 22 weist einen Vergleicher 30 und einen Drehzahlregler 32 auf. Der Drehmoment-Regelkreis 26 weist ebenfalls einen Vergleicher 34 und einen Regler 36 auf. Dieser Momenten-Regelkreis 26 ist dem Drehzahl-Regelkreis 22 unterlagert angeordnet. Der Vergleicher 30 bildet aus einem vorbestimmten Sollwert ω* und einem ermittelten drehzahlproportionalen Signal ω eine Regelabweichung, die mittels des Drehzahlreglers 32 zu Null geregelt wird. Am Ausgang dieses Drehzahlreglers 32 steht ein Momenten-Sollwert m* an, der mittels des Vergleichers 34 mit einem Momenten-Schätzwert m, der proportional der ermittelten Stromkomponente î_{Sq} ist, verglichen wird. Mittels des Reglers 36, an dessen Ausgang ein Sollwert einer orthogonalen Stromkomponente î_{Sq} ansteht, wird der Momenten-Schätzwert m dem Momenten-Sollwert m* nachgeführt. Die orthogonale Stromkomponente î_{Sq} wird auch als momentenbildende Stromkomponente bezeichnet, und ist eine Stromkomponente des feldorientierten Stromvektors "Motorstrom". Dem Fluss-Regelkreis 24 ist ein Flusssollwertbildner 38 vorgeschaltet, der ausgangsseitig mit einem Eingang eines Vergleichers 40 des Fluss-Regelkreises 24 verknüpft ist. Am invertierenden Eingang dieses Vergleichers 40 steht der berechnete Schätzwert der orthogonalen Stromkomponente î_{mR} an. Ausgangsseitig ist dieser Vergleicher mit einem Flussregler 42 verknüpft, an dessen Ausgang ein Sollwert einer zweiten orthogonalen Stromkomponente 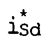 ansteht. Diese zweite orthogonale Stromkomponente 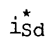 wird auch als flussbildende Stromkomponente bezeichnet. Diese beiden Stromkomponenten 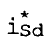 und 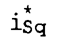 werden mittels eines Vektordrehers 44, an dessen Winkeleingang ein berechneter Flusswinkel-Schätzwert ε̂ ansteht, in orthogonale, ständerorientierte Stromkomponenten 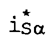 und 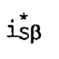 gewandelt. Mittels eines Koordinatenwandlers 46 werden aus diesen orthogonalen, ständerorientierten Stromkomponenten 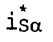 und 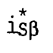 drei Stromsollwerte 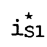 , 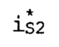 und 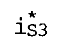 eines dreiphasigen Stromsystems erzeugt. Diese Stromsollwerte 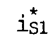 , 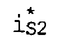 und 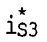 werden phasenweise jeweils einem Vergleicher 48 zugeführt, die ausgangsseitig jeweils mit einem Stromregler 50 verknüpft sind. Diese Vergleicher 48 sind jeweils eingangsseitig außerdem mit einer Messeinrichtung 18 verbunden.

Die Vorrichtung 2 zur Durchführung des erfindungsgemäßen Verfahrens verarbeitet entsprechend dem erfindungsgemäßen Verfahren die Größen Momenten-Schätzwert m und Momenten-Sollwert m* des Antriebs, bestehend aus lastseitigem Stromrichter 4 und Drehstrommotor 8 mit Verdichter 12. Das Ergebnis ist ein Signal S_{RS}, das signalisiert, dass der Störfall "Rotating Stall" auftritt. Um dieses Signal S_{RS} zu generieren, werden die beiden Momenten-Signale m̂ und m* miteinander verglichen, wobei es sich beim Momenten-Sollwert m* um einen stationären Wert handelt. Da dieser Momenten-Sollwert m* mittels eines überlagerten Drehzahl-Regelkreises 22 bestimmt wird, ist dieser Momenten-Sollwert m* betriebspunktabhängig. Stimmt der berechnete Momenten-Schätzwert m nicht mit dem stationären Momenten-Sollwert m* überein, so liegt der Störfall "Rotating Stall" vor.

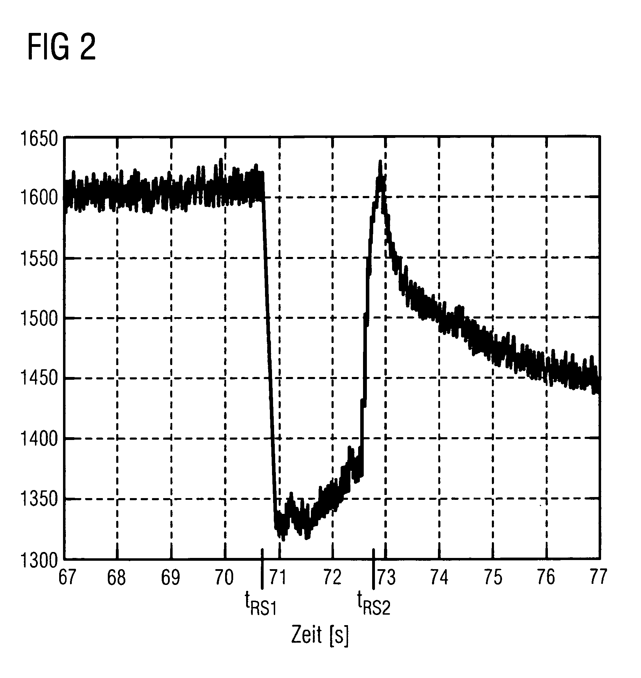

In der Figur 2 ist in einem Diagramm über der Zeit der Verlauf eines gemessenen Ankerstromes der Drehstrommaschine 8 mit angekoppeltem Verdichter 12 beim Störfall "Rotating Stall" bei einer Drehzahl n=17000 l/min dargestellt. Zum Zeitpunkt t_{RS1} bricht der Ankerstrom steil ein, der zum Zeitpunkt t_{RS2} wieder ansteigt. Dieser Ankerstrom ist infolge des Störfalls "Rotating Stall" eingebrochen.

Um den Eintritt des Störfalls "Rotating Stall" zum Zeitpunkt t_{RS1} möglichst unmittelbar nach diesem Zeitpunkt t_{RS1} zu erfassen, wird der Momenten-Schätzwert m, der proportional zur momentenbildenden Stromkomponente î_{Sq} des Drehmomentenmotors 8 ist, gefiltert, wobei dieses Filter Differentialanteile aufweist. Das heißt, mit Eintritt des Störfalls "Rotating Stall" zum Zeitpunkt t_{RS1} wechselt der gefilterte Momenten-Schätzwert m sprungartig seinen Wert, wobei der stationäre Momenten-Sollwert m* konstant verläuft. Um auch während auftretender Lastwechsel den Störfall "Rotating Stall" ermitteln zu können, wird eine ermittelte Soll-Ist-Abweichung des Drehmoments, die am Ausgang des Vergleichers 34 des Momenten-Regelkreises 26 als Regler-Abweichung ansteht, mit einem vorbestimmten Maximalwert verglichen. Wird dieser Maximalwert überschritten, so tritt während eines Lastwechsels der Störfall "Rotating Stall" auf.

Durch dieses erfindungsgemäße Verfahren kann bei einem Verdichter, der mittels eines umrichtergespeisten Drehstrommotors 8 angetrieben wird, auf zusätzliche Drucksensoren und/oder Schwingungsaufnehmer verzichtet werden, wobei auch die Nachteile dieser zusätzlichen Elemente im Verdichter 12 nicht mehr auftreten. Außerdem wird der Störfall "Rotating Stall" zuverlässig und zeitsynchron zum Zeitpunkt seines Auftretens ermittelt, so dass Gegenmaßnahmen rechtzeitig ergriffen werden können.

Diese Maßnahmen sind:
- Reduzierung der Drehzahl:
   Dazu ist zunächst die Reduktion des Motor-Drehmoments erforderlich, damit ein Gegenmoment des Verdichters 12 bremsend wirken kann. Ziel ist es, den Massenstrom zu verringern, um einen neuen stabilen Betriebspunkt zu erreichen.
- Anhebung der Drehzahl:
   Das erfordert zunächst die Erhöhung des Motor-Drehmoments. Ziel ist es, den Massenstrom zu erhöhen und dadurch wieder in einen stabilen Betriebspunkt zu gelangen.

Um diesen Störfall "Rotating Stall" umgehend nach Auftritt feststellen zu können, werden beim erfindungsgemäßen Verfahren bereits vorhandene Signale des umrichtergespeisten Drehstrommotors 8 verwendet. Dadurch kann dieses erfindungsgemäße Verfahren als Applikations-Software im Umrichter integriert werden. Dadurch kann jeder Verdichter 12, der mittels eines solchen umrichtergespeisten Drehstrommotors 8 angetrieben wird, ohne zusätzlichen Aufwand hinsichtlich des Störfalls "Rotating Stall" überwacht werden.

## Patentansprüche

1. Verfahren zum Erkennen eines Störfalls "Rotating Stall" bei einem Verdichter (12), der mittels eines umrichtergespeisten Drehstrommotors (8) angetrieben wird, wobei ein aus gemessenen Stromrichter-Ausgangsströmen (i_{S1}, i_{S2}, i_{S3}) und einem gemessenen drehzahlproportionalen Signals (ω) berechneter Momenten-Schätzwert (m) mit einem aus einem gemessenen und einem vorbestimmten drehzahlproportionalen Signal (ω, ω*) bestimmten Momenten-Sollwert (m*) derart verglichen wird, dass bei Ungleichheit ein Signal (S_{RS}) generiert wird, das anzeigt, dass der Störfall "Rotating Stall" eingetreten ist.

2. Verfahren nach Anspruch 1, **dadurch gekennzeichnet, dass** der berechnete Momenten-Schätzwert (m) differenziert wird.

3. Verfahren nach Anspruch 1, **dadurch gekennzeichnet, dass** der ermittelte Momenten-Sollwert (m*) differenziert wird.

4. Verfahren nach Anspruch 1, **dadurch gekennzeichnet, dass** eine aus Momenten-Schätzwert (m) und Momenten-Sollwert (m*) gebildete Momenten-Abweichung mit einem betriebspunktabhängigen stationären Wert derart verglichen wird, dass bei Überschreitung das Signal (S_{RS}) generiert wird.

5. Verfahren nach einem der vorgenannten Ansprüche, **dadurch gekennzeichnet, dass** die verwendeten Momentenwerte (m, m*) gefiltert werden.

6. Verfahren nach Anspruch 3, **dadurch gekennzeichnet, dass** die gebildete Momenten-Abweichung gefiltert wird.

7. Verfahren nach einem der vorgenannten Ansprüche, **dadurch gekennzeichnet, dass** das Signal (S_{RS}) eine Warnmeldung generiert.

## Claims

1. Method for detecting a "rotating stall" fault in a compressor (12) which is driven by a converter-fed three-phase motor (8), an estimated value of torque (m̂) calculated from measured converter output currents (i_{S1}, i_{S2}, i_{S3}) and a measured speed-proportional signal (ω) being compared with a torque setpoint (m*) determined from a measured and a predetermined speed-proportional signal (ω, ω*) in such a way that if they are not equal a signal (S_{RS}) is generated which indicates that the "rotating stall" fault has occurred.

2. Method according to Claim 1, **characterized in that** the calculated estimated value of torque (m̂) is differentiated.

3. Method according to Claim 1, **characterized in that** the determined torque setpoint (m*) is differentiated.

4. Method according to Claim 1, **characterized in that** a torque deviation formed from estimated value of torque (m̂) and torque setpoint (m*) is compared with an operating-point-dependent fixed value in such a way that the signal (S_{RS}) is generated if it is exceeded.

5. Method according to one of the preceding claims, **characterized in that** the torque values (m̂, m*) used are filtered.

6. Method according to Claim 3, **characterized in that** the torque deviation formed is filtered.

7. Method according to one of the preceding claims, **characterized in that** the signal (S_{RS}) generates an alarm.

## Revendications

1. Procédé de détection d'un incident "Rotating Stall" dans un compresseur ( 12 ), qui est entraîné au moyen d'un moteur ( 8 ) à courant triphasé alimenté par convertisseur, dans lequel on compare une valeur ( m ) d'estimation de couple calculée à partir de courants ( i_{S1}, i_{S2}, i_{S3} ) mesurés de sortie, du convertisseur et d'un signal ( ω ) mesuré proportionnel à la vitesse de rotation, à une valeur ( m* ) de consigne de couple déterminée à partir d'un signal (ω, ω' ) mesuré et d'un signal déterminé à l'avance et proportionnel à la vitesse de rotation, de manière à produire, s'il n'y a pas identité, un signal ( S_{RS} ) qui montre que l'incident "Rotating Stall" s'est produit.

2. Procédé suivant la revendication 1, **caractérisé en ce que** l'on différencie la valeur ( m ) d'estimation de couple calculée.

3. Procédé suivant la revendication 1, **caractérisé en ce que** l'on différencie la valeur ( m* ) de consigne de couple déterminée.

4. Procédé suivant la revendication 1, **caractérisé en ce que** l'on compare un écart de couple formé à partir d'une valeur ( m ) d'estimation de couple et d'une valeur ( m* ) de consigne de couple à une valeur fixe qui dépend du point de fonctionnement, de manière à produire le signal ( S_{RS} ) s'il y a dépassement.

5. Procédé suivant l'une des revendications précédentes, **caractérisé en ce que** l'on filtre les valeurs ( m, m* ) de couple utilisé.

6. Procédé suivant la revendication 3, **caractérisé en ce que** l'on filtre l'écart de couple formé.

7. Procédé suivant l'une des revendications précédentes, **caractérisé en ce que** le signal ( S_{RS} ) produit un message d'avertissement.
